# FASCICULE DE BREVET EUROPEEN

(11) **EP 0 995 053 B1**
(45) Date de publication et mention de la délivrance du brevet: **17.09.2003**
(21) Numéro de dépôt: 99919333.7
(22) Date de dépôt: 14.05.1999
(51) Int. Cl.: F16F 15/139, F16D 69/02

(54) **DISPOSITIF AMORTISSEUR DE TORSION COMPORTANT UN DISPOSITIF DE FROTTEMENT AYANT UNE MATIERE DE FROTTEMENT NE GENERANT PAS DE BRUIT EN FONCTIONNEMENT**
TORSIONSDÄMPFUNGSEINRICHTUNG MIT EINEM REIBUNGSGLIED AUS GERÄUSCHLOS ARBEITENDEM REIBUNGSMATERIAL
TORQUE DAMPING DEVICE COMPRISING A FRICTION ELEMENT COMPRISING A FRICTION MATERIAL NOT GENERATING NOISE WHEN OPERATING

(30) Priorité: 13.05.1998 FR 9806008
(43) Date de publication de la demande: 26.04.2000
(73) Titulaire: VALEO, 75017 Paris (FR)
(72) Inventeur: TARDIVEAU, Christophe, F-75018 Paris (FR); LEBAS, Gilles, F-92600 Asnières (FR); MAUREL, Pascal, F-75009 Paris (FR)
(86) Numéro de dépôt international: FR9901161
(87) Numéro de publication internationale: WO99058877

(56) Documents cités:
- EP-A- 0 120 200
- WO-A-96/07837
- WO-A-96/23952
- FR-A- 2 609 132
- FR-A- 2 687 442
- FR-A- 2 688 564
- US-A- 5 526 714

## Description

La présente invention a pour objet un dispositif amortisseur de torsion, notamment pour véhicules automobiles, comportant deux parties coaxiales montées rotatives l'une par rapport à l'autre, à l'encontre de moyens élastiques et d'un dispositif de frottement agissant entre lesdites parties et comportant au moins un élément en matière de frottement solidaire de l'une desdites parties et en contact de frottement avec une portée de frottement solidaire de l'autre desdites parties. Un tel dispositif est connu de FR-A-2 688 564.

On connaît des matières de frottement constituées d'une résine de base et d'une charge minérale.

Le but de la présente invention est de proposer une telle matière de frottement qui, lorsqu'elle coopère en frottement avec une portée de frottement, ne génère pas de bruit.

Suivant l'invention, un dispositif amortisseur de torsion du type ci-dessus est caractérisé par le fait que la matière de frottement comprend une résine de base et une charge minérale, laquelle charge minérale étant constituée de sulfate de baryum afin d'éliminer le bruit de frottement.

L'expérience a montré que, grâce à la présence de sulfate de baryum, le coefficient de frottement est stable en fonction de la température et de l'humidité ; de plus, le coefficient de frottement diminue lorsque la pression d'application augmente, et augmente lorsque la vitesse de glissement augmente ; par ailleurs, le coefficient de frottement statique est inférieur au coefficient de frottement dynamique, et l'amortissement interne est élevé : toutes ces caractéristiques, qui comme on le sait éliminent le bruit de frottement, sont obtenues grâce à la présence de sulfate de baryum.

Avantageusement, la matière de frottement comprend 10 à 70 % en poids de charge minérale, et de préférence 40 à 60 % en poids.

De préférence, elle comprend également une charge d'élastomère.

Avantageusement, elle comprend 5 à 20 % en poids de charge d'élastomère.

De préférence, la résine de base est un matériau thermoplastique ou thermodurcissable.

Avantageusement, la résine de base est un polyamide, de préférence un polyamide 4-6.

De préférence, de bons résultats ont été obtenus avec une matière de frottement comprenant en poids 28 % de Polyamide 4-6, 50 % de sulfate de baryum, 10 % de fibres de carbone et 12 % de Poly(tétrafluoréthylène) ou PTFE.

Selon un autre exemple, la matière de frottement comprend en poids 45 % de Polyamide 4-6, 40 % de sulfate de baryum et 15 % de PTFE.

Selon encore un autre exemple, la matière de frottement comprend en poids 30 % de Polyamide 4-6, 40 % de sulfate de baryum, 15 % de PTFE et 15 % d'élastomère.

Avantageusement, l'une desdites parties du dispositif amortisseur de torsion consiste en une première masse portant un moyeu dit premier moyeu, tandis que l'autre desdites parties consiste en une seconde masse comportant un plateau portant à sa périphérie interne un moyeu dit second moyeu entourant au moins partiellement ledit premier moyeu, avec interposition de moyens de palier anti-friction disposés radialement entre le premier moyeu et le second moyeu.

De préférence, ledit dispositif de frottement entoure ledit premier moyeu, l'élément en matière de frottement étant en forme d'anneau de frottement et la portée de frottement étant globalement d'orientation axiale et solidaire de l'une desdites première et seconde masses.

De préférence, une rondelle dite de serrage est munie de moyens de serrage, de maintien et de solidarisation en rotation de l'anneau de frottement à l'autre desdites seconde et première masses.

Avantageusement, ledit dispositif de frottement agit axialement entre la première masse et la seconde masse, l'élément en matière de frottement est une rondelle de frottement et la portée de frottement est globalement perpendiculaire à l'axe du dispositif amortisseur.

De préférence, le dispositif de frottement comporte une rondelle d'application soumise à l'action de moyens élastiques à action axiale pour serrage de ladite rondelle de frottement entre ladite rondelle d'application et ladite portée de frottement.

Avantageusement, la portée de frottement est solidaire de la première masse et la rondelle de frottement est conformée à sa périphérie externe pour engrener à jeu avec des saillies axiales solidaires du second moyeu, les moyens élastiques action axiale prenant appui sur un épaulement du premier moyeu pour action sur la rondelle d'application.

Pour mieux faire comprendre l'objet de l'invention, on va en décrire maintenant, à titre d'exemple, purement illustratif et non limitatif, des modes de réalisation représentés sur les dessins annexés.

Sur ces dessins :
la figure 1 est une vue partielle en coupe axiale d'un dispositif amortisseur de torsion selon l'invention ;
la figure 2 est une vue en coupe selon II-II de la figure 1 ;
la figure 3 est une vue éclatée en perspective de l'ensemble unitaire de frottement des figures 1 et 2, à plus grande échelle ;
la figure 4 est une vue analogue à la figure 1 et correspond à une variante.

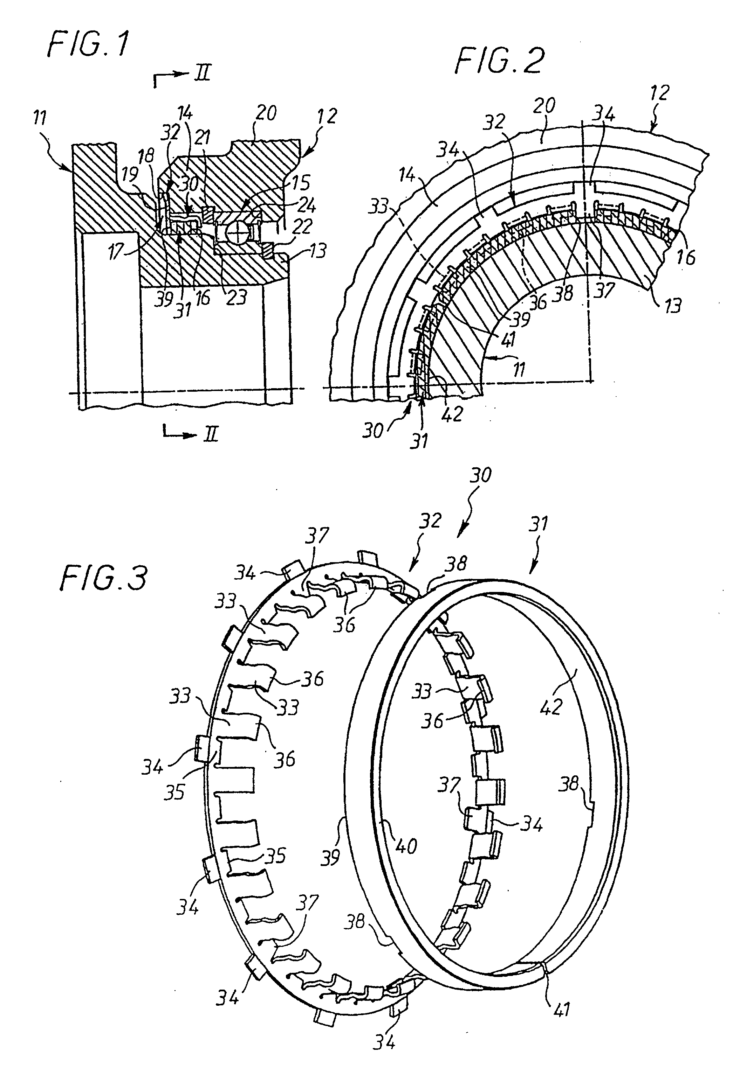

Le dispositif amortisseur de torsion, illustré dans les figures 1 à 3, est un double volant amortisseur destiné à équiper un véhicule automobile. Ce double volant comporte une première masse 11 comprenant un moyeu 13 dit premier moyeu, une seconde masse 12 comprenant un plateau 20 portant intérieurement un moyeu 14 dit second moyeu entourant ici ledit premier moyeu 13, un amortisseur de torsion à action circonférentielle accouplant la première masse 11 au plateau 20 de la seconde masse 12, par exemple du type décrit dans le document FR-A-2 688 564 auquel il conviendra de se reporter pour plus de détails, et comportant un dispositif de frottement 30 agissant selon l'invention radialement entre la première masse 11 et la seconde masse 12.

La première masse 11 forme la partie d'entrée de l'amortisseur de torsion, tandis que la seconde masse 12 forme la partie de sortie dudit amortisseur.

La seconde masse 12 est montée rotative sur la première masse 11 grâce à des moyens de palier anti-friction 15 interposés radialement entre les moyeux 13 et 14.

La première masse 11 est calée en rotation sur le moteur à combustion interne du véhicule automobile en étant fixée sur le vilebrequin dudit moteur et la seconde masse 12 est calée en rotation sur l'arbre d'entrée de la boîte de vitesses par l'intermédiaire de l'embrayage du véhicule automobile.

Le dispositif de frottement 30 entoure le premier moyeu 13 sur lequel sont montés les moyens de palier anti-friction 15, ici un roulement à billes à une rangée de billes. En variante, les moyens de palier 15 peuvent consister en un roulement à deux rangées de billes ou en un palier en matériau anti-friction.

Le roulement 15 est interposé radialement entre le premier moyeu 13 et le second moyeu 14. Ce second moyeu 14, qui s'étend à la périphérie interne du plateau 20, a un alésage interne épaulé pour appui de la bague externe du roulement 15 engagé dans ledit alésage ; le roulement 15 est calé axialement sur ledit second moyeu 14 par ledit épaulement 24 et par un jonc 21.

Le roulement 15 est calé axialement sur le premier moyeu 13, d'une part, par l'intermédiaire d'un jonc 22 et, d'autre part, par l'intermédiaire d'un épaulement 23 formé à la faveur d'un changement de diamètre du premier moyeu 13.

La seconde masse 12 est ainsi calée axialement sur la première masse 11 en étant montée rotative par rapport à celle-ci grâce aux moyens de palier anti-friction 15.

Le dispositif de frottement 30 forme un ensemble unitaire de frottement comportant au moins un élément 31 en matière de frottement en forme d'anneau de frottement pour contact de frottement avec une portée de frottement 16, globalement d'orientation axiale, solidaire de l'une desdites première 11 et seconde 12 masses ; ledit ensemble unitaire 30 est interposé radialement entre ladite portée de frottement 16 et l'autre desdites seconde 12 et première 11 masses.

Ici, la portée de frottement 16 est continue et appartient au premier moyeu 13. Plus précisément, cette portée est d'orientation axiale et est de forme annulaire cylindrique. Elle s'étend radialement en vis-à-vis du second moyeu 14.

L'ensemble unitaire 30 comprend une rondelle de serrage 32 présentant un certain nombre de moyens lui permettant d'assurer plusieurs fonctions.

A la périphérie externe de la rondelle de serrage 32, sont ménagées des griffes 34 globalement radiales constituant des moyens d'assemblage pour assembler la rondelle de serrage 32 et le second moyeu 14 ; pour ce faire, le second moyeu 14 présente en bout un lamage 17 avec la paroi cylindrique axiale interne 18 duquel les griffes 34 sont adaptées à coopérer.

Pour solidarisation en rotation de l'anneau de frottement 31 avec la rondelle de serrage 32, donc avec la seconde masse 12 par l'intermédiaire du second moyeu 14, la rondelle de serrage 32 présente à sa périphérie interne au moins une patte 37 dite de calage en rotation qui s'étend radialement et qui est adaptée à coopérer avec une encoche radiale 38 de l'anneau de frottement 31 ; ici, sont prévues trois pattes de calage en rotation 37, également réparties circonférentiellement, et donc trois encoches radiales 38 ; comme on peut le voir sur les dessins, les trois pattes de calage en rotation 37 sont placées au droit de certaines griffes d'assemblage 34. Ici, un jeu circonférentiel existe entre les pattes de calage 37 et les bords des encoches radiales 38 : la rondelle 32 est donc calée en rotation après rattrapage d'un jeu circonférentiel.

Les encoches radiales 38 de l'anneau de frottement 31 débouchent dans l'une des faces transversales d'extrémité 39, 40 de celui-ci, ici la face 39.

La rondelle de serrage 32 porte également, comme son nom l'indique, les moyens de serrage de l'anneau de frottement 31 ; ceux-ci sont constitués par des pattes 33 élastiques de serrage radial s'étendant axialement et appliquant l'anneau de frottement 31 contre la portée de frottement 16 du premier moyeu 13, l'anneau de frottement 31 étant déformable radialement ; ici, l'anneau de frottement 31 est un anneau fendu ; sa fente 41 est visible sur les figures 2 et 3 ; le diamètre de sa face cylindrique de frottement 42, ici sa face interne, est au repos supérieur à celui de la portée de frottement 16 avec laquelle elle coopère.

Comme cela est visible sur les figures, les pattes de serrage radial 33 s'étendent axialement depuis globalement la périphérie interne de la rondelle de serrage 32.

C'est également la rondelle de serrage 32 qui assure le maintien ou calage axial de l'anneau de frottement 31.

Pour ce faire, la rondelle de serrage 32 présente deux séries de pattes 35 et 36, de calage axial, s'étendant transversalement et distantes axialement globalement de la longueur axiale de l'anneau de frottement 31.

Une série de pattes 35 de calage axial est ménagée à la périphérie interne de la rondelle de serrage 32 dans le plan transversal où s'étendent les griffes d'assemblage 34.

L'autre série de pattes 36 est ici constituée par des rebords radiaux dirigés vers l'axe et ménagés à l'extrémité des pattes de serrage radial 33 : lesdites pattes de serrage radial 33 étant élastiques, la mise en place de l'anneau de frottement 31 est facilitée.

Ici, les pattes de calage axial 35, les pattes de serrage radial 33 et les griffes 34 sont alternées circonférentiellement ; plus précisément, intérieurement les pattes de calage axial 35 et les pattes de serrage radial 33 se succèdent alternativement, sachant que trois des pattes de calage axial 35 sont absentes et remplacées par trois pattes 37 de calage en rotation ; extérieurement, une griffe 34 est prévue toutes les deux pattes de calage axial 35 au droit desquelles elles s'étendent.

Comme on le voit, l'ensemble constitué par la rondelle de serrage 32 et l'anneau de frottement 31 qu'elle porte constitue un ensemble unitaire de frottement 30.

Ici, l'ensemble unitaire de frottement 30 est dispose au côté intérieur par rapport au roulement à billes 15 ; il peut bien entendu être disposé du côté extérieur.

Le fonctionnement du dispositif découle de la description ci-dessus.

Lors du déplacement angulaire relatif des première 11 et seconde 12 masses, l'anneau de frottement 31 entraîné par le second moyeu 14 de la seconde masse 12 frotte sur la portée de frottement 16 ménagée à la périphérie externe du premier moyeu 13 de la première masse 11, et ce en permanence.

On appréciera que, lorsque le véhicule roule, le serrage radial diminue, l'anneau de frottement 31 s'ouvrant sous l'effet de la force centrifuge ; ceci est favorable car, comme on le sait, c'est surtout à l'arrêt et au démarrage du véhicule qu'un amortissement important est recherché.

Dans le document FR-A-2 688 564 précité, la seconde masse porte un voile avec des bras radiaux pour action sur des ressorts de forme courbe, à action circonférentielle, s'appuyant sur des blocs portés par la première masse.

Bien entendu, comme décrit dans le document FR-A-2 730 292, les ressorts peuvent être montés à articulation à la périphérie externe de la première masse et à articulation à la périphérie interne de la seconde masse, en étant d'orientation radiale au repos.

Selon l'invention, la matière de frottement constituant l'élément 31 contient du sulfate de baryum en vue d'éviter que ledit élément 31 ne fasse du bruit lorsqu'il coopère en frottement avec la portée de frottement 16 liée à la première masse 11.

Grâce à la présence du sulfate de baryum, le coefficient de frottement attaché à l'élément 31 est stable en fonction de la température et de l'humidité, et le coefficient de frottement statique est inférieur au coefficient de frottement dynamique ; on constate également que, lorsque la pression d'application de l'élément 31 contre la portée de frottement 16 augmente, par construction par exemple ou par usure, le coefficient de frottement diminue ; par ailleurs, l'amortissement interne est augmenté ; toutes ces caractéristiques, dues à la présence de sulfate de baryum, expliquent l'absence de bruit en fonctionnement.

Selon un exemple qui a donné satisfaction, cette matière de frottement est constituée en poids de 28 % de Polyamide 4-6, 50 % de sulfate de baryum, 10 % de fibres de carbone et 12 % de PTFE.

Selon un autre exemple qui a également donné satisfaction, elle est constituée en poids de 30 % de Polyamide 4-6, 40 % de Sulfate de baryum, 15 % de PTFE et 15 % d'élastomère.

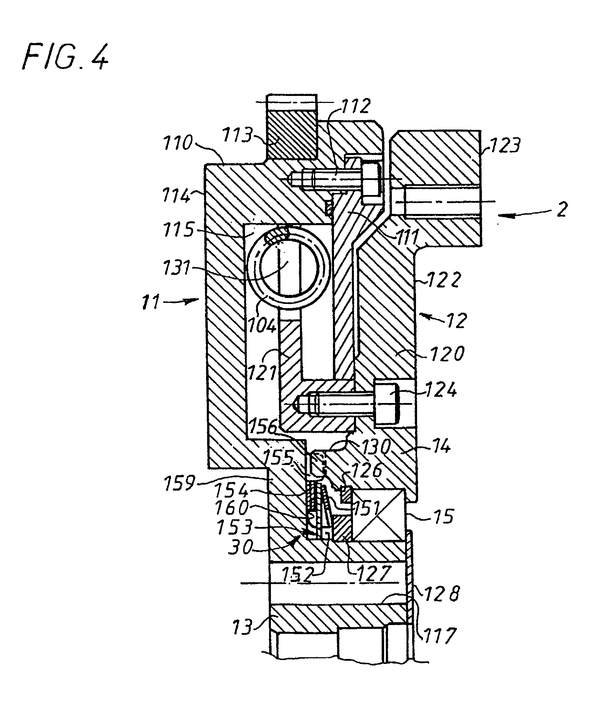

Le double volant amortisseur illustré sur la figure 4 est destiné à équiper un véhicule automobile et est du genre comportant une première masse 11 comprenant un premier moyeu ou moyeu central 13, une seconde masse 12 comprenant un plateau 120 portant intérieurement un second moyeu ou moyeu externe 14 entourant en partie ledit moyeu central 13, un amortisseur de torsion à action circonférentielle 104,141,132,131,121 accouplant la première masse 1 1 au plateau 120 de la seconde masse 12 et comportant une partie 121 de fixation solidarisée par des moyens de fixation 124 audit plateau 120, un dispositif de frottement 30 agissant axialement entre la première masse 11 et la seconde masse 12 et comprenant une rondelle de frottement 154 en contact de frottement avec une portée de frottement 160 solidaire de la première masse 11.

Dans ce double volant, d'une part, la seconde masse 12 est montée rotative sur la première masse 11 par l'intermédiaire de moyens de paliers anti-friction 15 interposés radialement entre ledit moyeu central 13 et ledit moyeu externe 14 et, d'autre part, ledit dispositif de frottement 30 entoure le moyeu central 13 et comporte une rondelle d'application 153 soumise à l'action de moyens élastiques à action axiale 151 pour serrage de ladite ondelle de frottement 154 entre ladite rondelle d'application 153 et ladites portée de frottement 160.

La rondelle de frottement 154 est conformée à sa périphérie externe pour engrener à jeu avec des saillies axiales 156 solidaires du moyeu externe 14 et distinctes des moyens de fixation 124 de l'amortisseur de torsion au plateau 120 de la deuxième masse 12, ledit amortisseur de torsion, avec ses moyens de fixation associés 124, s'étendant radialement au-delà desdites saillies 156, et les moyens élastiques à action axiale 151 du dispositif de frottement 30 prenant appui sur un épaulement 127 porté par le moyeu central 13, pour action sur ladite rondelle d'application 153.

Plus précisément, la première masse 11 comporte des pièces globalement annulaires, à savoir un boîtier creux, ici métallique, avec un flasque 114, globalement transversal et étanche, portant à sa périphérie externe un rebord 110, d'orientation axiale, un couvercle 111 et le moyeu central 13. Le couvercle 111 délimite extérieurement avec le boîtier 110,114 une cavité annulaire 115, remplie partiellement de graisse.

Pour ce faire, le couvercle 111 est fixé de manière étanche sur le rebord 110, ici par des vis 112. Le rebord 110 porte à fixation une couronne dentée 113 propre à être entraînée par le démarreur du véhicule.

Le moyeu central 13 est solidaire du flasque 114, dit ci-après flasque principal, formant le fond du boîtier 110, 114. Ce moyeu central 13 s'étend en saillie axiale par rapport audit flasque 114 et est ici d'un seul tenant avec le boîtier métallique obtenu avantageusement par moulage.

La première masse 11 est calée en rotation sur le moteur à combustion interne du véhicule automobile en étant fixée sur le vilebrequin dudit moteur par des vis traversant des passages 117 pratiqués dans le moyeu central 13.

La seconde masse 12 est calée en rotation sur l'arbre d'entrée de la boîte de vitesses par l'intermédiaire de l'embrayage du véhicule automobile. Pour ce faire la seconde masse 12 présente le plateau 120 formant le plateau de réaction de l'embrayage. C'est sur ce plateau qu'est propre à venir en contact de frottement le disque de friction de l'embrayage solidaire en rotation de l'arbre d'entrée de la boîte de vitesses ; la face de friction du plateau 120, ici en fonte, porte la référence 122, tandis que la face de fixation du couvercle de l'embrayage porte la référence 123.

La seconde masse 12 comporte en outre la partie de fixation 121 en forme de voile annulaire, ici métallique en forme de L, accouplé en rotation au plateau de réaction 120 et pénétrant dans la cavité 115 axialement entre le flasque 114 et le couvercle 111. Le voile 121 appartient à l'amortisseur de torsion, et a ici une section en forme de L avec une partie centrale de fixation tubulaire fixée au plateau 120. Le couvercle 111 s'étend intérieurement jusqu'à ladite partie centrale du voile 121 en entourant celle-ci avec formation d'un passage étroit. Ainsi, la graisse de la cavité 115 ne risque pas de s'échapper.

Le voile 121 est doté de bras radiaux 131 pour interférence et appui sur des moyens élastiques à action circonférentielle 104 appartenant audit amortisseur de torsion. Ici, les moyens élastiques 104 consistent en une pluralité de ressorts à boudin de grande longueur s'appuyant sur des blocs saillants, en vis-à-vis, solidaires, par exemple par rivetage ou soudage, du couvercle 111 et du flasque 114. Ces blocs appartiennent également à l'amortisseur de torsion, tout comme les bras 132, et sont échancrés pour coopérer avec des socles servant d'appui aux extrémités des ressorts 104.

Ici, les ressorts 104 sont montés sans jeu entre les blocs 132 et avec jeu par rapport aux bras 131. Bien entendu, les ressorts 104 peuvent être montés sans jeu par rapport aux bras 131 selon les applications.

Les ressorts 104 s'étendent à la périphérie interne du rebord 110 et sont lubrifiés par la graisse de la cavité 115, ce qui augmente leur durée de vie.

Ici, les moyens élastiques à action axiale 151 du dispositif de frottement 30 consistent en une rondelle Belleville. En variante, il peut s'agir d'une rondelle ondulée à action axiale ou de deux rondelles Belleville.

La rondelle d'application 153, de taille réduite, est liée en rotation au moyeu central 13 par une liaison à coopération de formes. Ici, la liaison est du type à cannelures et le moyeu présente à sa périphérie externe localement une surépaisseur 152 avec des dents de forme trapézoïdale, tandis que la rondelle d'application 153 comporte à sa périphérie interne des échancrures complémentaires pour coopérer avec lesdites dents.

En variante, on peut former des méplats complémentaires sur la surépaisseur 152 et dans l'alésage interne de la rondelle 153.

La rondelle de frottement 154 est insérée axialement entre la rondelle d'application 153 et la portée de frottement 160 de la première masse 11. Le dispositif de frottement 30 entoure le moyeu central 13 sur lequel sont montés les moyens de paliers anti-friction 15, ici un roulement à billes à une rangée de billes.

Le roulement 15 est interposé radialement entre le moyeu central 13 et le moyeu externe 14 solidaire du plateau de réaction 120 en étant ici d'un seul tenant avec celui-ci. Ce moyeu externe 14, qui s'étend à la périphérie interne du plateau 120, est épaulé au niveau de la face 122 pour appui de la bague externe du roulement engagé dans l'alésage interne du moyeu externe 14 et calé axialement sur ledit moyeu externe 14 par ledit épaulement et par une rondelle 126, tel qu'un circlips, calée axialement intérieurement sur le moyeu externe 14 à la faveur d'un épaulement de celui-ci.

Le roulement 15 est calé axialement sur le moyeu central 13, d'une part, par l'intermédiaire d'une rondelle 128 servant d'appui à la tête des vis de fixation (non visibles) du moyeu central 13 au vilebrequin et, d'autre part, par l'intermédiaire de l'épaulement 127 constitué d'une rondelle calée axialement sur un épaulement formé à la faveur de l'extrémité libre de la surépaisseur 152.

La seconde masse 12 est ainsi calée axialement sur la première masse 11 en étant montée rotative par rapport à celle-ci grâce aux moyens de paliers anti-friction 15.

La rondelle 127 sert d'appui à la rondelle Belleville 15. La rondelle de frottement 154 est conformée pour engrener à jeu avec les saillies axiales 156 du moyeu externe 14.

La rondelle de frottement 154 porte à sa périphérie externe 155 ici des échancrures ouvertes extérieurement dans lesquelles s'engagent à jeu les saillies 156.

La rondelle de frottement 154 est monobloc. Elle est montée libre en rotation par rapport à la rondelle d'application 153 et à la portée de frottement 160 de la première masse 11.

Ici cette portée de frottement 160 est continue et appartient à un flasque porteur 159 décalé axialement par rapport au flasque principal 114 en s'étendant radialement vers l'intérieur. Ce flasque 159 est saillant par rapport au flasque 114 et dirigé vers les saillies 156. Ce flasque 159 porte centralement d'un seul tenant le moyeu 19, et s'étend à la périphérie interne du flasque 114. La partie centrale du boîtier est donc étagée, son flasque 159 étant globalement dans le plan du voile 121.

La portée de frottement 160 est formée par la face transversale du flasque 159 tournée vers le moyeu externe 14.

On voit que le voile 121 s'étend radialement au-delà du moyeu externe 14 et que ledit moyeu externe 14 présente, en saillie axiale par rapport au roulement 15, un nez annulaire 130 portant à son extrémité libre les saillies 156.

Avantageusement la rondelle 154 de frottement est épaissie à sa périphérie externe 155 en direction du moyeu externe 14, en sorte que les portées d'appui, entre les saillies 156 et ladite rondelle 154, sont augmentées et les phénomènes de matage réduits.

Selon l'invention, la rondelle de frottement 154 est en une matière comprenant du sulfate de baryum pour éviter qu'elle ne fasse du bruit lorsqu'elle coopère en frottement avec la portée de frottement 160.

Selon un exemple qui a donné satisfaction, la matière de frottement comprend en poids 45 % de Polyamide 4-6, 40 % de sulfate de baryum et 15 % de PTFE. Les mêmes raisons que celles décrites précédemment à propos des exemples ci-dessus expliquent l'absence de bruit en fonctionnement.

## Revendications

1. Dispositif amortisseur de torsion, notamment pour véhicules automobiles, comportant deux parties coaxiales (11, 12) montées rotatives l'une par rapport à l'autre, à l'encontre de moyens élastiques et d'un dispositif de frottement (30) agissant entre lesdites parties et comportant au moins un élément (31) en matière de frottement solidaire de l'une desdites parties et en contact de frottement avec une portée de frottement (16) solidaire de l'autre desdites parties, **caractérisé par le fait que** la matière de frottement comprend une résine de base et une charge minérale, laquelle charge minérale étant constituée de sulfate de baryum afin d'éliminer le bruit de frottement.

2. Dispositif amortisseur de torsion selon la revendication 1, **caractérisé par le fait que** la matière de frottement comprend 10 à 70 % de charge minérale en poids.

3. Dispositif amortisseur de torsion selon la revendication 2, **caractérisé par le fait que** la matière de frottement comprend 40 à 60 % de charge minérale en poids.

4. Dispositif amortisseur de torsion selon l'une des revendications 1 à 3, **caractérisé par le fait que** la matière de frottement comprend également une charge d'élastomère.

5. Dispositif amortisseur de torsion selon la revendication 4, **caractérisé par le fait que** la matière de frottement comprend 5 à 20 % en poids de charge d'élastomère.

6. Dispositif amortisseur de torsion selon l'une des revendications 1 à 5, **caractérisé par le fait que** la résine de base est un matériau thermoplastique ou thermodurcissable.

7. Dispositif amortisseur de torsion selon la revendication 6, **caractérisé par le fait que** la résine de base est un polyamide, de préférence un polyamide 4-6.

8. Dispositif amortisseur de torsion selon les revendications 3 et 7 prises en combinaison, **caractérisé par le fait que** la matière de frottement comprend en poids 28 % de Polyamide 4-6, 50 % de sulfate de baryum, 10 % de fibres de carbone et 12 % de PTFE.

9. Dispositif amortisseur de torsion selon les revendications 3 et 7 prises en combinaison, **caractérisé par le fait que** la matière de frottement comprend en poids 45 % de Polyamide 4-6, 40 % de sulfate de baryum et 15 % de PTFE.

10. Dispositif amortisseur de torsion selon les revendications 3, 4 et 7 prises en combinaison, **caractérisé par le fait que** la matière de frottement comprend en poids 30 % de Polyamide 4-6, 40 % de sulfate de baryum, 15 % de PTFE et 15 % d'élastomère.

11. Dispositif amortisseur de torsion selon l'une des revendications 1 à 10, **caractérisé par le fait que** l'une desdites parties consiste en une première masse (11) portant un moyeu (13) dit premier moyeu, tandis que l'autre desdites parties consiste en une seconde masse (12) comportant un plateau portant à sa périphérie interne un moyeu (14) dit second moyeu entourant au moins partiellement ledit premier moyeu (13), avec interposition de moyens de palier anti-friction (15) disposés radialement entre le premier moyeu (13) et le second moyeu (14).

12. Dispositif amortisseur de torsion selon la revendication 11, **caractérisé par le fait que** ledit dispositif de frottement (30) entoure ledit premier moyeu (13), l'élément (31) en matière de frottement étant en forme d'anneau de frottement et la portée de frottement (16) étant globalement d'orientation axiale et solidaire de l'une desdites première (11) et seconde (12) masses.

13. Dispositif amortisseur de torsion selon la revendication 12, **caractérisé par le fait qu'**une rondelle (32) dite de serrage est munie de moyens (33-37) de serrage, de maintien et de solidarisation en rotation de l'anneau de frottement (31) à l'autre desdites seconde (12) et première (11) masses.

14. Dispositif amortisseur de torsion selon la revendication 11, **caractérisé par le fait que** ledit dispositif de frottement (30) agit axialement entre la première masse (11) et la seconde masse (12), l'élément en matière de frottement est une rondelle de frottement (154) et la portée de frottement (160) est globalement perpendiculaire à l'axe du dispositif amortisseur.

15. Dispositif amortisseur de torsion selon la revendication 14, **caractérisé par le fait que** le dispositif de frottement (30) comporte une rondelle d'application (153) soumise à l'action de moyens élastiques (151) à action axiale pour serrage de ladite rondelle de frottement (154) entre ladite rondelle d'application (153) et ladite portée de frottement (160).

16. Dispositif amortisseur de torsion selon la revendication 15, **caractérisé par le fait que** la portée de frottement (160) est solidaire de la première masse (11) et la rondelle de frottement (154) est conformée à sa périphérie externe pour engrener à jeu avec des saillies axiales (156) solidaires du secord moyeu (14), les moyens élastiques (151) à action axiale prenant appui sur un épaulement (127) du premier moyeu (13) pour action sur la rondelle d'application (153).

## Patentansprüche

1. Torsionsdämpfervorrichtung, insbesondere für Kraftfahrzeuge, umfassend zwei koaxiale Teile (1, 2), die im Verhältnis zueinander drehbar entgegen elastischen Mitteln und einer Reibungsvorrichtung (30) gelagert sind, die zwischen den beiden Teilen wirksam ist und wenigstens ein Element (31) aus Reibwerkstoff umfasst, das fest mit einem der besagten Teile verbunden ist und in Reibkontakt mit einer fest mit dem anderen der besagten Teile verbundenen Reibauflagefläche (16) steht, **dadurch gekennzeichnet, dass** der Reibwerkstoff ein Basisharz und einen mineralischen Füllstoff enthält, wobei der besagte mineralische Füllstoff aus Bariumsulfat besteht, um Reibegeräusche auszuschalten.

2. Torsionsdämpfervorrichtung nach Anspruch 1, **dadurch gekennzeichnet, dass** der Reibwerkstoff 10 bis 70 Gewichts-% an mineralischem Füllstoff enthält.

3. Torsionsdämpfervorrichtung nach Anspruch 2, **dadurch gekennzeichnet, dass** der Reibwerkstoff 40 bis 60 Gewichts-% an mineralischem Füllstoff enthält.

4. Torsionsdämpfervorrichtung nach einem der Ansprüche 1 bis 3, **dadurch gekennzeichnet, dass** der Reibwerkstoff außerdem einen Elastomerfüllstoff enthält.

5. Torsionsdämpfervorrichtung nach Anspruch 4, **dadurch gekennzeichnet, dass** der Reibwerkstoff 5 bis 20 Gewichts-% Elastomerfüllstoff enthält.

6. Torsionsdämpfervorrichtung nach einem der Ansprüche 1 bis 5, **dadurch gekennzeichnet, dass** das Basisharz ein Thermoplast oder ein Duroplast ist.

7. Torsionsdämpfervorrichtung nach Anspruch 6, **dadurch gekennzeichnet, dass** das Basisharz ein Polyamid, vorzugsweise ein Polyamid 4-6, ist.

8. Torsionsdämpfervorrichtung nach den Ansprüchen 3 und 7 in Kombination, **dadurch gekennzeichnet, dass** der Reibwerkstoff 28 Gewichts-% Polyamid 4-6, 50 Gewichts-% Bariumsulfat, 10 Gewichts-% Kohlenstofffasern und 12 Gewichts-% PTFE enthält.

9. Torsionsdämpfervorrichtung nach den Ansprüchen 3 und 7 in Kombination, **dadurch gekennzeichnet, dass** der Reibwerkstoff 45 Gewichts-% Polyamid 4-6, 40 Gewichts-% Bariumsulfat und 15 Gewichts-% PTFE enthält.

10. Torsionsdämpfervorrichtung nach den Ansprüchen 3, 4 und 7 in Kombination, **dadurch gekennzeichnet, dass** der Reibwerkstoff 30 Gewichts-% Polyamid 4-6, 40 Gewichts-% Bariumsulfat, 15 Gewichts-% PTFE und 15 Gewichts-% Elastomer enthält.

11. Torsionsdämpfervorrichtung nach einem der Ansprüche 1 bis 10, **dadurch gekennzeichnet, dass** einer der besagten Teile aus einer ersten Masse (11) besteht, die eine als erste Nabe bezeichnete Nabe (13) trägt, während der andere der besagten Teile aus einer zweiten Masse (12) besteht, die an ihrem inneren Umfang eine als zweite Nabe bezeichnete Nabe (14) trägt, welche die besagte erste Nabe (13) wenigstens teilweise unter Einfügung von Antrifriktionslagermitteln (15) umgibt, die radial zwischen der ersten Nabe (13) und der zweiten Nabe (14) angeordnet sind.

12. Torsionsdämpfervorrichtung nach Anspruch 11, **dadurch gekennzeichnet, dass** die besagte Reibungsvorrichtung (30) die besagte erste Nabe (13) umgibt, wobei das Element (31) aus Reibwerkstoff in Form eines Reibrings ausgeführt ist und die Reibauflagefläche (16) insgesamt axial ausgerichtet und fest mit einer der besagten ersten (11) und zweiten (12) Massen verbunden ist.

13. Torsionsdämpfervorrichtung nach Anspruch 12, **dadurch gekennzeichnet, dass** eine als Einspannscheibe bezeichnete Scheibe (32) mit Mitteln (33-37) zum Einspannen, Halten und zur drehfesten Verbindung des Reibrings (31) an der anderen der zweiten (12) und ersten (11) Massen versehen ist.

14. Torsionsdämpfervorrichtung nach Anspruch 11, **dadurch gekennzeichnet, dass** die besagte Reibungsvorrichtung (30) axial zwischen der ersten Masse (11) und der zweiten Masse (12) wirkt, wobei das Element aus Reibwerkstoff eine Reibscheibe (154) ist und die Reibauflagefläche (160) insgesamt senkrecht zur Achse der Torsionsdämpfervorrichtung verläuft.

15. Torsionsdämpfervorrichtung nach Anspruch 14, **dadurch gekennzeichnet, dass** die Reibungsvorrichtung (30) eine Anpressscheibe (153) umfasst, die der Einwirkung von axial wirksamen elastischen Mitteln (151) zur Einspannung der besagten Reibscheibe (154) zwischen der besagten Anpressscheibe (153) und der besagten Reibauflagefläche (160) ausgesetzt ist.

16. Torsionsdämpfervorrichtung nach Anspruch 15, **dadurch gekennzeichnet, dass** die Reibauflagefläche (160) fest mit der ersten Masse (11) verbunden ist und die Reibscheibe (154) an ihrem äußeren Umfang so gestaltet ist, dass sie mit Spiel an fest mit der zweiten Nabe (14) verbundenen axialen Vorsprüngen (156) eingreift, wobei die axial wirksamen elastischen Mittel (151) auf einer Schulter (127) der ersten Nabe (13) zur Auflage kommen, um auf die Anpressscheibe (153) einzuwirken.

## Claims

1. Torsion damping device, in particular for motor vehicles, comprising two coaxial parts (11, 12) mounted so as to rotate with respect to each other, counter to elastic means and a friction device (30) acting between the said parts and comprising at least one element (31) made from friction material integral with one of the said parts and in rubbing contact with a friction surface (16) integral with the other one of the said parts, **characterised by** the fact that the friction material comprises a base resin and a mineral filler, the said mineral filler consisting of barium sulphate, in order to eliminate the friction noise.

2. Torsion damping device according to Claim 1, **characterised by** the fact that the friction material comprises 10% to 70% mineral filler by weight.

3. Torsion damping device according to Claim 2, **characterised by** the fact that the friction material comprises 40% to 60% mineral filler by weight.

4. Torsion damping device according to one of Claims 1 to 3, **characterised by** the fact that the friction material also comprises an elastomer filler.

5. Torsion damping device according to Claim 4, **characterised by** the fact that the friction material comprises 5% to 20% elastomer filler by weight.

6. Torsion damping device according to one of Claims 1 to 5, **characterised by** the fact that the base resin is a thermoplastic or thermosetting material.

7. Torsion damping device according to Claim 6, **characterised by** the fact that the base resin is a polyamide, preferably a polyamide 4-6.

8. Torsion damping device according to Claims 3 and 7 taken in combination, **characterised by** the fact that the friction material comprises by weight 28% polyamide 4-6, 50% barium sulphate, 10% carbon fibres and 12% PTFE.

9. Torsion damping device according to Claims 3 and 7 taken in combination, **characterised by** the fact that the friction material comprises by weight 45% polyamide 4-6, 40% barium sulphate and 15% PTFE.

10. Torsion damping device according to Claims 3, 4 and 7 taken in combination, **characterised by** the fact that the friction material comprises by weight 30% polyamide 4-6, 40% barium sulphate, 15% PTFE and 15% elastomer.

11. Torsion damping device according to one of Claims 1 to 10, **characterised by** the fact that one of the said parts consists of a first mass (11) carrying a hub (13) referred to as the first hub, whilst the other one of the said parts consists of a second mass (12) comprising a plate carrying at its internal periphery a hub (14) referred to as the second hub at least partially surrounding the said first hub (13), with the interposing of antifriction bearing means (15) disposed radially between the first hub (13) and the second hub (14).

12. Torsion damping device according to Claim 11, **characterised by** the fact that the said friction device (30) surrounds the said first hub (13), the element (31) made from friction material being in the form of a friction ring and the friction surface (16) being of axial orientation overall and integral with one of the said first (11) and second (12) masses.

13. Torsion damping device according to Claim 12, **characterised by** the fact that a so-called clamping washer (32) is provided with means (33-37) of clamping, holding and rotationally fixing the friction ring (31) to the other one of the said second (12) and first (11) masses.

14. Torsion damping device according to Claim 11, **characterised by** the fact that the said friction device (30) acts axially between the first mass (11) and the second mass (12), the element made from friction material is a friction washer (154) and the friction surface (160) is perpendicular overall to the axis of the damping device.

15. Torsion damping device according to Claim 14, **characterised by** the fact that the friction device (30) comprises an application washer (153) subjected to the action of axially acting elastic means (151) for clamping the said friction washer (154) between the said application washer (153) and the said friction surface (160).

16. Torsion damping device according to Claim 15, **characterised by** the fact that the friction surface (160) is integral with the first mass (11) and the friction washer (154) is formed at its external periphery so as to mesh with clearance with axial projections (156) integral with the second hub (14), the axially acting elastic means (151) bearing on a shoulder (127) on the first hub (13) for action on the application washer (153).
